# EUROPEAN PATENT SPECIFICATION

(11) **EP 1 169 211 B1**
(45) Date of publication and mention of the grant of the patent: **16.06.2004**
(21) Application number: 00921287.9
(22) Date of filing: 07.04.2000
(51) Int. Cl.: B62D 23/00, B62D 25/20, B62D 27/02

(54) **A BEAM CONNECTION**
ANSCHLUSSPROFIL
PIECE DE LIAISON DE POUTRELLES POUR OSSATURE

(30) Priority: 09.04.1999 SE 9901260
(43) Date of publication of application: 09.01.2002
(73) Proprietor: Volvo Personvagnar AB, 405 08 Göteborg (SE)
(72) Inventor: WEIMAN, Martin, S-414 82 Göteborg (SE)
(74) Representative: Mossmark, Anders
(86) International application number: PCT/SE2000/000661
(87) International publication number: WO 2000/061424

(56) References cited:
- GB-A- 2 293 354
- US-A- 1 512 700
- US-A- 1 629 278
- US-A- 4 468 052

## Description

### TECHNICAL FIELD:

The present invention relates to a beam knot forming part of a vehicle body structure and comprising at least three beam elements, which each discloses two side walls which extend with relative intervals and at least one transverse wall which connects said side walls. Said beam elements are rigidly connected with each other in the beam knot and protrude from this in respective directions, wherein a first beam element of said beam elements discloses a recess in one side wall thereof, which recess is limited by two side edges, that a second beam element of said beam elements inserts transversely through said recess with a section and is connected with the opposite side wall of the first beam element and discloses a width between its side walls which corresponds to the width of the recess between its side edges (see US-A-1 629 278).

### BACKGROUND OF THE INVENTION:

Previously, beam knots in vehicle body structures, generally comprising three beam elements which are connected with each other, have been constructed in such manner that two of the beam elements have been connected with their ends to a longitudinal beam element. Generally, a floor panel is included which covers two of the beam elements and supports the third beam element. In this regard, the connection only takes place between two of the beam elements and, furthermore, in one single plane for each connection. Considering the increasingly extensive demands that for security reasons and other motives are called for structural strength in vehicle body structures, the known solution discloses an unsatisfying strength on account of a limited rigidity and capacity for load transmission between the beam elements.

US-A-1629278 discloses a beam knot forming part of a vehicle body structure and comprising at least three beam elements. Said beam elements are connected with each other in the beam knot and protrude from this in respective directions. A first beam element of said beam elements discloses a recess in one side wall thereof in which a second beam element of said beam elements inserts transversely through said recess with a section. The third beam element is connected to the outer surface of the first beam element. The beam knot according to US-A-1629278 discloses an unsatisfying strength on account of a limited rigidity and capacity for load transmission between the beam elements.

### SUMMARY OF THE INVENTION:

The object of the present invention is to provide a beam knot which satisfies extensive demands for structural strength, have a long service life and allows utilization of efficient assembly methods.

Said object is achieved by means of a beam knot according to the present invention, wherein a first beam element of said beam elements discloses a recess in one side wall thereof, which recess is limited by two side edges, that a second beam element of said beam elements inserts transversely through said recess with a section and is connected with the opposite side wall of the first beam element and discloses a width between its side walls which corresponds to the width of the recess between its side edges. The invention is characterized in that a third beam element of said beam elements is partly situated in the first beam element and with its side walls is connected with at least the side walls of the second beam element and connects to the opposite side wall of the first beam element.

By means of the beam knot according to the invention, at least three beam elements are connected directly with each other along more than one connecting plane for each beam element, which provides a high degree of rigidity and a satisfying load transmission between the beam elements, and also a long service life.

### BRIEF DESCRIPTION OF THE DRAWINGS:

The invention will be further described in the following with reference to the preferred embodiments and to the appended drawings, in which
Fig. 1 is an exploded view which shows a schematic example of the elements forming part of the beam knot, and
Fig. 2 is a perspective view which shows a practical embodiment of the beam knot according to the invention in assembled state.

### PREFERRED EMBODIMENT:

In a preferred embodiment, the beam knot according to the invention forms part of a vehicle body structure for motor vehicles, for example a vehicle body structure where the floor structure is connected with the side structures of the vehicle, which comprise standing or vertical beam elements in front of, between or behind the vehicle's doors.

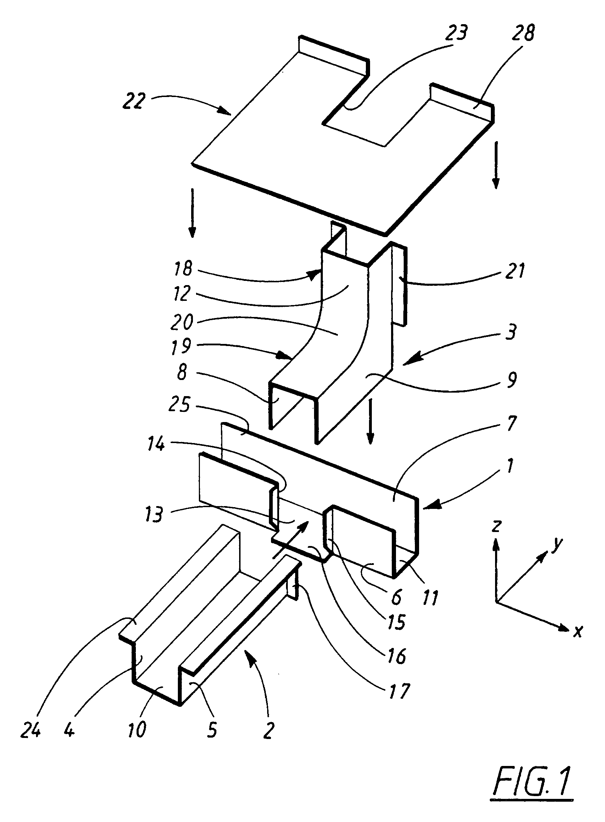

As is best apparent from Fig. 1, the beam knot in the schematically shown example is intended for assembly of three beam elements, more precisely a first beam element, henceforth called the longitudinal beam 1, a second beam element, henceforth called the cross beam 2, and a third beam element, henceforth called the beam foot 3. In the shown example, the longitudinal beam is intended to extend in the longitudinal direction of the vehicle body structure, whereas the cross beam is intended to extend in the latitudinal direction of the structure and the beam foot in the vertical as well as the latitudinal direction. However, according to which structure has been selected, the beam knot can be turned in any optional direction so that each beam can have a completely different direction. All of the beams 1, 2, 3 are of the channel beam type, i.e. they have essentially a U-profile form, which is a fundamental condition for at least two of the beams at least in those sections which are intended to be connected with each other in the assembled beam knot. Thus, each beam discloses two side walls 4-9 which in each beam travel two and two in parallel planes with a selected relative distance. The side walls in each beam 1, 2, 3 are held together by means of a transverse wall 10, 11, 12 which extends transversely to, i.e. essentially at right angles to, the side walls. In the two horizontal beams 1, 2, the transverse wall 10, 11 forms a base portion, i.e. so that the profile form is a U turned the right way round, whereas the third beam 3 has a reversed profile form, i.e. so that it in cross-section forms a reversed U.

In order to define various directions and planes more easily, a coordinate system with xyz-directions has been included in the drawings, where x represents longitudinal direction, y latitudinal direction and z perpendicular direction or vertical direction in a vehicle body structure, e.g. a motor vehicle.

As is apparent from Fig. 1, the longitudinal beam 1 is provided with a recess 13 which is arranged in one side wall 6 of the beam. In the shown example, the recess is rectangular and discloses a shape and dimensions, which are adjusted according to the cross-section of the cross beam so that this can be accommodated in the recess. This is limited by two side edges 14 of the side wall 6, from which a connecting flange 15 projects transversely on both sides of the recess, which connecting flange is intended for connection to the respective side wall 4, 5 in the transversal beam 2, which shall be described more in detail hereinafter. The recess 13 is additionally limited by a lower edge which is formed by means of a connecting flange 16, which is constituted by a projection from the transverse wall of the beam 1 and is intended for connection to the underside of the transverse wall 10 in the cross beam 2.

In one end section thereof, the cross beam 2 discloses two connecting flanges 17, which project sideways from one side wall 4, 5 each of the cross beam and are situated in a joint plane which forms a connecting plane for the cross beam. The two connecting flanges 15 of the longitudinal beam, which protrude from the side wall 6, form together with the side walls 4, 5 of the cross beam a connecting surface each which extend in yz-direction, whereas the lower connecting flange 16 in the longitudinal beam 1 together with the underside of the transverse wall 10 in the cross beam 2 form connecting surfaces in xy-direction. The two connecting flanges 17 in the cross beam 2 form together with the second side wall 7 in the longitudinal beam 1 connecting surfaces in xz-direction.

As is apparent from Fig. 1, the longitudinal beam 1 and the cross beam 2 have a respective explicit essential extension, more precisely x-direction and y-direction, respectively, whereas the beam foot 3 has a more complex structure, even though its essential extension outwards from the beam knot is perpendicular, i.e. z-direction. In fact, the beam foot 3 is essentially L-shaped having two legs which are transversely arranged in relation to each other, where the vertical leg 18 forms a beam connection to a vertical beam which is intended to form part of the vehicle body structure, whereas the second leg 19 is a horizontally directed leg, which forms an anchor section in the beam knot. Accordingly, the two side walls 8, 9 of the beam foot 3 are also essentially L-shaped, as well as the transverse wall 12, which thereby extends in two planes which are transversely arranged in relation to each other and in addition forms a softly bevelled transition section 20, the purpose of which is, among other things, to secure a high degree of rigidity in the beam knot. In the shown example, the beam foot discloses two connecting flanges 21, which are intended to form a connection to a not shown part of the vehicle body structure and at the base disclose a recess which essentially corresponds to the height of the connecting flanges 17 in the cross beam 2. The lying or horizontal part of the side walls 8, 9 form connecting surfaces, which are intended to co-operate with the side walls 4, 5 in the cross beam 2, which likewise form connecting surfaces in connection with one end section of the beam, which extend in yz-direction.

In the example which is shown in Fig. 1, a cover plate 22 is also shown, which for example is a floor panel forming part of the vehicle body structure. The cover plate 22 discloses a recess 23 which is intended to accommodate the beam foot 3 including the bevelled section 20. In order to form rest surfaces and connecting surfaces against the cover plate, the cross beam is provided with additional connecting flanges 24 which protrude sideways from the side walls 4, 5 of the beam. Furthermore, the longitudinal beam 1 discloses a connecting flange 25 which is formed by a raised section of the side wall 7, to which a connecting flange 28 on the cover plate 22 is intended to be connected.

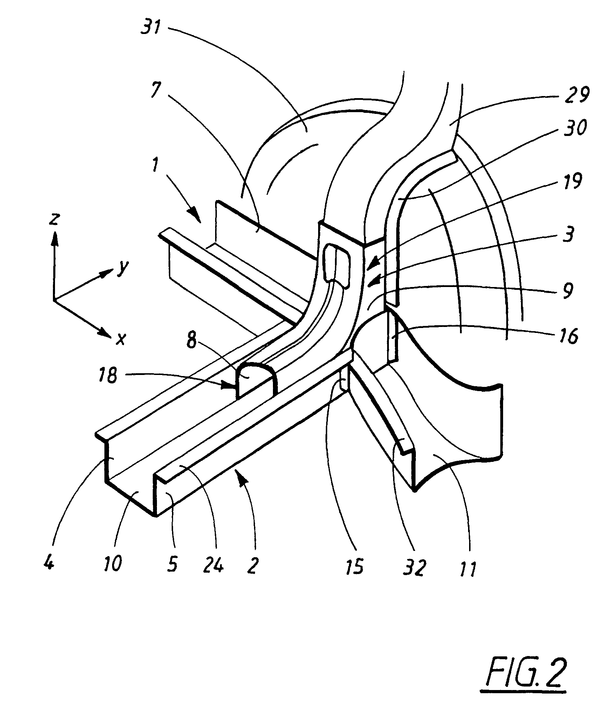

Thus, in Fig. 2, a practical embodiment of the beam knot according to the invention is shown in assembled state where the included beam elements are slightly modified in their design in relation to the example according to Fig. 1. However, corresponding parts have the same reference numerals as in Fig. 1. The beam knot according to the invention is assembled by means of the fact that one end section of the second beam element 2 is situated inside the first beam element 1, more precisely so, that the end section is inserted through the recess 13, see Fig. 1, and connects to the side wall 7 in the first beam element. In this regard, the two connecting flanges 16 are caused to bear against the inside of the side wall 7 in joint connecting surfaces essentially in a joint xz-plane, and are attached to said inside by means of, for example, spot welding. In this regard, the connecting flanges 15 of the first beam element 1 connect to the outside of the side walls 4, 5 of the second beam element 2 and are attached to these in respective connecting surfaces in a respective yz-plane by means of, for example, spot welding. In this regard, the base of the second beam element, i.e. the transverse wall 10, rests against the inside of the base of the first beam element, i.e. its transverse wall 11, as well as the protruding connecting flange 16, see Fig. 1, and may, in the joint connecting surfaces which have been formed, be attached here as well, for example by means of spot welding, if a high-strength connection is required.

Next, the third beam element 3, i.e. the beam foot, is placed inside the second beam element 2, which involves that the beam foot 3 is partly situated inside the first beam element 1 as well and that one of its legs 18 is inserted into the second beam element 2. Thus, in this regard, the side walls 8, 9 in the horizontal leg of the beam foot 3 bear against the inside of the side walls 4, 5 in the second beam element 2 and are attached to these on a required number of places along the joint connecting surfaces. Thus, parts of the side walls of the third beam 3 element are overlapping, i.e. they overlap parts of the side walls 4, 5 of the second beam element 2. The profile form of the beam foot 3 is selected so that it forms a reversed U, whereas the first and the second beam element in cross-section form a U turned the right way round.

In the shown example according to Fig. 2, an additional beam 29 is also shown, which forms part of the vehicle body structure and connects to the upwardly directed leg 19 of the beam foot 3 by means of the fact that it inserts into this. By means of, for example, spot welding, the beam 29 can be attached to the beam foot in overlapping surfaces. The beam 29 discloses connecting flanges 30 which by means of, for example, spot welding are intended to be attached to a cover plate 31, in the shown example a wheel housing, forming part of the structure. The cover plate 31 connects to the outside of the side wall 7 of the first beam element 1 and is attached to this by means of, for example, spot welding. In the example according to Fig. 2, the first beam element is curved in order to adjust to the form of the cover plate 31 and discloses a connecting flange 32 at the upper edge of its side wall 6, which connecting flange is intended to support a cover plate 22 together with the upwardly turned connecting flanges 24 of the second beam element, which is shown in Fig. 1.

To sum up, the beam knot according to the invention has the following construction:
the longitudinal side beam 1 discloses a recess 13 in the interior side wall 6;
the cross beam 2 inserts into the side beam 1 and discloses such a width, that the side walls 4, 5 of the cross beam 2 bear against the edges 14 of the recess 13;
the cross beam 2 extends right up to the exterior side wall 7 of the longitudinal beam 1 and is mounted in this;
the vertical beam 3 discloses such a width, that the side walls 8, 9 of the vertical beam 3 bear against the side walls 4, 5 of the cross beam 2;
the vertical beam 3 extends right up to the transverse wall 10 of the cross beam 2 and is mounted in this; and
the exterior part of the vertical beam 3 extends towards the exterior side wall 7 of the longitudinal beam 1.

One essential feature is constituted by the fact that the width of the recess 13 of the longitudinal beam 1 corresponds to (in practice slightly exceeds) the width of either the cross beam 2 or the vertical beam 3 and that the remaining beam is inserted into the beam structure and discloses a width which corresponds to the remaining opening.

The invention is not limited to the embodiments which are described above and shown in the drawings. For example, it is possible to arrange the connecting flanges so that they have another location and extension and direction. Furthermore, it is possible that the beam foot is situated in the second beam element even before this is situated in the first beam element. Furthermore, by means of limitation of the length of the flanges 24, it is possible to let the side walls 8, 9 of the beam foot extend on the outside of the side walls 4, 5 of the second beam element. Furthermore, it is possible that the beam elements have another profile form than a U-profile form, for example a box-profile form, but in this regard, it is necessary that at least the first and the second beam element disclose recesses, i.e. a U-profile form in those sections where the other beam elements are situated. Of the shown beam elements, only the beam foot is in practice shown in its entirety, whereas the other beam elements are shown cut off and in practice have a greater extension with a length which is adjusted to the case in question. The beam foot 3 and the upwardly directed beam element 29 can be constructed as one single element. The cover plates 22, 31 and the connecting connecting flanges 24, 25, 32 do not primarily form part of the beam knot and can be replaced by other elements.

## Claims

1. Beam knot forming part of a vehicle body structure and comprising at least three beam elements (1, 2, 3), which each discloses two side walls (4-9) which extend with relative intervals and at least one transverse wall (10-12) which connects said side walls and which beam elements are rigidly connected with each other in the beam knot and protrude from this in respective directions, wherein a first beam element (1) of said beam elements discloses a recess (13) in one side wall (6) thereof, which recess is limited by two side edges (4), that a second beam element (2) of said beam elements inserts transversely through said recess with a section and is connected with the opposite side wall (7) of the first beam element and discloses a width between its side walls which corresponds to the width of the recess between its side edges, **characterized in that** a third beam element of said beam elements is partly situated in the first beam element and with its side walls (8, 9) is connected with at least the side walls (4, 5) of the second beam element and connects to the opposite side wall of the first beam element.

2. Beam knot according to claim 1, **characterized in that** parts of the side walls (8, 9) of the third beam element overlap parts of the side walls (4, 5) of the second beam element.

3. Beam knot according to claim 2, **characterized in that** the third beam element (3) inserts into the second beam element (2) so that parts of its side walls (8, 9) connect to and are attached to the side walls (4, 5) of the second beam element.

4. Beam knot according to claim 2, **characterized in that** the profile form of the first and the second beam element (1, 2) is a U turned the right way round, whereas the profile form of the third beam element (3) is a reversed U.

5. Beam knot according to claim 1, **characterized in that** the third beam element (3) is constituted by an essentially L-shaped beam foot having a first leg (18) which extends in the longitudinal direction of the second beam element (2) and a second leg (19) which extends transversely to the first leg and the first beam element (1).

6. Beam knot according to claim 1, **characterized in that** the first beam element (1) discloses connecting flanges (15) which form side edges (14) of the recess (13) and extend in the longitudinal direction of the second beam element (2).

7. Beam knot according to claim 1, **characterized in that** the second beam element (2) discloses connecting flanges (17) in the section thereof which inserts into the first beam element (1), said connecting flanges connecting to the side wall (7) in the first beam element (1).

8. Beam knot according to any one of the preceding claims, **characterized in that** the first beam element (1) protrudes from beam knot in the vehicle's driving direction (x), that the second beam element (2) extends sideways (y) transversely to the driving direction (x), that the third beam element (3) extends vertically (z) and **in that** the first and second beam elements (1, 2) form part of a floor structure in the vehicle and the third beam element (3) connects to a side structure of the vehicle body structure.

## Patentansprüche

1. Trägerknoten, welcher einen Teil eines Fahrzeugkörperaufbaus bildet, mit mindestens drei Trägerelementen (1, 2, 3), von denen jedes zwei Seitenwände (4 - 9), die sich mit jeweiligen Zwischenräumen erstrecken, und mindestens eine Querwand (10 - 12) aufweist, die die Seitenwände verbindet, und dessen Trägerelemente miteinander starr in dem Trägerknoten verbunden sind und von diesem in jeweiligen Richtungen vorstehen, wobei ein erstes Trägerelement (1) der Trägerelemente eine Aussparung (13) in einer seiner Seitenwände (6) aufweist, wobei diese Aussparung durch zwei Seitenränder (14) begrenzt ist, daß sich ein zweites Trägerelement (2) der Trägerelemente quer durch diese Aussparung hindurch mit einem Abschnitt einfügt und mit der gegenüberliegenden Seitenwand (7) des ersten Trägerelements verbunden ist und eine Breite zwischen seinen Seitenwänden aufweist, die der Breite der Aussparung zwischen deren Seitenrändern entspricht, **dadurch gekennzeichnet, dass** ein drittes Trägerelement der Trägerelemente zum Teil in dem ersten Trägerelement angeordnet ist und mit seinen Seitenwänden (8, 9) mindestens mit den Seitenwänden (4, 5) des zweiten Trägerelements verbunden ist und mit der gegenüberliegenden Seitenwand des ersten Trägerelements verbunden ist.

2. Trägerknoten nach Anspruch 1, **dadurch gekennzeichnet, dass** Teile der Seitenwände (8, 9) des dritten Trägerelements mit Teilen der Seitenwände (4, 5) des zweiten Trägerelements überlappen.

3. Trägerknoten nach Anspruch 2, **dadurch gekennzeichnet, dass** das dritte Trägerelement (3) in das zweite Trägerelement (2) so einsetzt ist, dass Teile seiner Seitenwände (8, 9) an den Seitenwänden (4, 5) des zweiten Trägerelements angebracht und mit ihnen verbunden sind.

4. Trägerknoten nach Anspruch 2, **dadurch gekennzeichnet, dass** die Profilform des ersten und zweiten Trägerelements (1, 2) ein aufrecht stehendes U bildet, wohingegen die Profilform des dritten Trägerelements (3) ein umgekehrt stehendes U bildet.

5. Trägerknoten nach Anspruch 1, **dadurch gekennzeichnet, dass** das dritte Trägerelement (3) aus einem im Wesentlichen L-förmigen Trägerfuß besteht, welcher einen ersten Schenkel (18), der sich in der Längsrichtung des zweiten Trägerelements (2) erstreckt, und einen zweiten Schenkel (19) besitzt, der sich quer zu dem ersten Schenkel und zu dem ersten Trägerelement (1) erstreckt.

6. Trägerknoten nach Anspruch 1, **dadurch gekennzeichnet, dass** das erste Trägerelement (1) Verbindungsränder (15) aufweist, die Seitenränder (14) der Aussparung (13) bilden und sich in der Längsrichtung des zweiten Trägerelements (2) erstrecken.

7. Trägerknoten nach Anspruch 1, **dadurch gekennzeichnet, dass** das zweite Trägerelement (2) Verbindungsränder (17) in dem Abschnitt aufweist, welcher in das erste Trägerelement (1) eingebracht ist, wobei die Verbindungsränder mit der Seitenwand (7) in dem ersten Trägerelement (1) verbunden sind.

8. Trägerknoten nach einem der vorhergehenden Ansprüche, **dadurch gekennzeichnet, dass** das erste Trägerelement (1) von dem Trägerknoten in die Fahrtrichtung (x) des Fahrzeugs hervorsteht, dass sich das zweite Trägerelement (2) seitlich (y) quer zur Fahrtrichtung (x) erstreckt, dass sich das dritte Trägerelement (3) vertikal (z) erstreckt, und dass das erste und zweite Trägerelement (1, 2) Teil eines Bodenaufbaus im Fahrzeug bilden und dass das dritte Trägerelement (3) mit einem Seitenaufbau des Fahrzeugkörperaufbaus verbunden ist.

## Revendications

1. Pièce de liaison de poutrelles formant une partie de la structure du corps d'un véhicule et comprenant au moins trois éléments formant poutrelle (1, 2, 3) qui exposent chacun deux parois latérales (4 à 9) qui s'étendent selon des intervalles relatifs et au moins une paroi transversale (10 à 12) qui raccorde lesdites parois latérales et lesquels éléments formant poutrelle sont raccordés de façon rigide l'un à l'autre dans la pièce de liaison de poutrelles et font saillie depuis celle-ci dans des directions respectives, dans laquelle un premier élément formant poutrelle (1) desdits éléments formant poutrelle expose un renfoncement (13) dans une de ses parois latérales (6), lequel renfoncement est limité par deux bords latéraux (4), un deuxième élément formant poutrelle (2) desdits éléments formant poutrelle s'insère transversalement à travers ledit renfoncement dans sa section et est raccordé à la paroi latérale opposée (7) du premier élément formant poutrelle et expose une largeur entre ses parois latérales qui correspond à la largeur du renfoncement entre ses bords latéraux, **caractérisée en ce qu'**un troisième élément formant poutrelle desdits éléments formant poutrelle est en partie situé dans le premier élément formant poutrelle et avec ses parois latérales (8, 9), est raccordé à au moins les parois latérales (4, 5) du deuxième élément formant poutrelle et est raccordé à la paroi latérale opposée du premier élément formant poutrelle.

2. Pièce de liaison de poutrelles selon la revendication 1, **caractérisée en ce que** des parties des parois latérales (8, 9) du troisième élément formant poutrelle chevauchent des parties des parois latérales (4, 5) du deuxième élément formant poutrelle.

3. Pièce de liaison de poutrelles selon la revendication 2, **caractérisée en ce que** le troisième élément formant poutrelle (3) s'insère dans le deuxième élément formant poutrelle (2) de façon à ce que des parties de ses parois latérales (8, 9) soient raccordées et attachées aux parois latérales (4, 5) du deuxième élément formant poutrelle.

4. Pièce de liaison de poutrelles selon la revendication 2, **caractérisée en ce que** la forme du profil du premier et du deuxième éléments formant poutrelle (1, 2) est un U à l'endroit, tandis que la forme du profil du troisième élément formant poutrelle (3) est un U inversé.

5. Pièce de liaison de poutrelles selon la revendication 1, **caractérisée en ce que** le troisième élément formant poutrelle (3) est constitué par un pied de poutrelle essentiellement en forme de L ayant une première jambe (18) qui s'étend dans la direction longitudinale du deuxième élément formant poutrelle (2) et une seconde jambe (19) qui s'étend transversalement à la première jambe et au premier élément formant poutrelle (1).

6. Pièce de liaison de poutrelles selon la revendication 1, **caractérisée en ce que** le premier élément formant poutrelle (1) expose des rebords de raccordement (15) qui forment des bords latéraux (14) du renfoncement (13) et s'étendent dans la direction longitudinale du deuxième élément formant poutrelle (2).

7. Pièce de liaison de poutrelles selon la revendication 1, **caractérisée en ce que** le deuxième élément formant poutrelle (2) expose des rebords de raccordement (17) dans sa section qui s'insèrent dans le premier élément formant poutrelle (1), lesdits rebords de raccordement se raccordant à la paroi latérale (7) dans le premier élément formant poutrelle (1).

8. Pièce de liaison de poutrelles selon l'une quelconque des revendications précédentes, **caractérisée en ce que** le premier élément formant poutrelle (1) fait saillie depuis la pièce de liaison de poutrelles dans la direction de pilotage du véhicule (x), le deuxième élément formant poutrelle (2) s'étend sur le côté (y) transversalement à la direction de pilotage (x), le troisième élément formant poutrelle (3) s'étend verticalement (z), et **en ce que** les premier et deuxième éléments formant poutrelle (1, 2) forment une partie d'une structure de plancher dans le véhicule et le troisième élément formant poutrelle (3) se raccorde à une structure latérale de la structure du corps du véhicule.
